# EUROPEAN PATENT APPLICATION

(11) **EP 4 679 289 A1**
(43) Date of publication of application: **14.01.2026**
(21) Application number: 25187415.2
(22) Date of filing: 03.07.2025
(51) Int. Cl.: G06F 16/34, G06F 16/957, G06F 40/205

(54) **SYSTEM AND METHOD FOR HANDLING OF JSON OBJECTS BY A LARGE LANGUAGE MODEL**

(30) Priority: 09.07.2024 US 202418766697
(71) Applicant: HONEYWELL INTERNATIONAL INC., Charlotte, NC 28202 (US)
(72) Inventor: SINGH, Ankit, Charlotte, 28202 (US); SUBBER, Waad, Charlotte, 28202 (US); HARTYE, Eric, Charlotte, 28202 (US)
(74) Representative: Haseltine Lake Kempner LLP

(57) **Abstract**

The present disclosure discloses a system and method for handling of JSON objects by a large language model (LLM). The proposed system and method involves receiving a user input requesting an analysis of one or more quality records, and extracting the one or more of quality records, wherein each quality record comprises one or more JSON objects. The system and method further involve identifying an applicable rule for parsing each of the one or more JSON objects, parsing each of the one or more JSON objects by an API corresponding to the identified applicable rule, feeding the parsed JSON objects to the LLM to obtain the analysis of the one or more quality records, and displaying the obtained analysis of the one or more quality records to the user.

## Description

### TECHNICAL FIELD

Present disclosure relates to a system and a method of handling JSON objects, and particularly, relates to summarization of one or more JSON files corresponding to different quality records.

### BACKGROUND

Quality records are maintained for different products that may be manufactured or produced in a plant, factory, or a manufactory industry. The quality records are used to store information relating to the quality of the products, and may be stored in a database or server maintained by the plant or factory using either pure JSON objects, pure PDF files, or a combination of both. The analysis of quality of a product can hence be ascertained based on analysis of the information stored in the quality records associated with the product.

The analysis of the quality records may be performed manually or based on the implementation of AI tools such as large language models (LLMs). However, the analysis of the quality records manually may be difficult as the information stored in JSON files is not easily interpretable as they are not in natural language. Furthermore, implementation of LLMs may also be inaccurate, as the LLMs tend to achieve optimal efficiency when provided with inputs clearly defined in English, and providing as much purpose and context as possible. Further still, LLMs may also be ineffective in producing accurate responses when provided with hybrid quality records comprising attached files in formats including PDFs.

Hence, there remains a need of a solution for converting JSON objects and attached files corresponding to quality records into data in natural language form, such that natural language-based data may be used as input for performing analysis of quality records of different products.

### SUMMARY OF THE INVENTION

In general, embodiments of the present disclosure herein provides a system and method for handling of JSON objects by a large language model. Other implementations will be, or will become, apparent to one with skill in the art upon examination of the following figures and detailed description. It is intended that all such additional implementations be included within this description be within the scope of the disclosure and be protected within the scope of the following claims.

In accordance with an embodiment of the present disclosure, an exemplary system for performing analysis and generating summary of quality records based on handling of JSON objects by a large language model is provided. The system comprises one or more processors, a memory storing program instructions configured to receive a user input requesting an analysis of one or more quality records; extract the one or more of quality record, wherein each quality record comprises one or more JSON object; identify an applicable rule for parsing the JSON object, wherein the applicable rule is based on one or more of the user input, the one or more quality record and the JSON object; parse the JSON object based on the identified applicable rule, wherein the parsing is performed by requesting an API corresponding to the identified applicable rule; feed the parsed JSON object to the large language model to obtain the analysis of the one or more quality record; and display the obtained analysis of the one of more quality record to the user.

In another embodiment, the present disclosure provides a method for performing analysis and generating summary of quality records based on handling of JSON objects by a large language model. The method comprises: receiving a user input requesting an analysis of one or more quality record; extracting the one or more quality record, wherein each quality record comprises one or more JSON object; identifying an applicable rule for parsing the JSON object, wherein the applicable rule is based on one or more of the user input, the one or more quality record and the JSON object; parsing the JSON object based on the identified applicable rule, wherein the parsing is performed by requesting an API corresponding to the identified applicable rule; feeding the parsed JSON object to a large language model to obtain the analysis of the one or more quality record; and displaying the obtained analysis of the one or more quality record to the user.

In yet another embodiment, the present disclosure provides a non-transitory computer-readable storage medium comprising computer program code for execution by one or more processors of an apparatus. The computer program code is configured to, when executed by the one or more processors, cause the apparatus to: receive a user input requesting an analysis of one or more quality record; extract the one or more quality record, wherein each quality record comprises one or more JSON object; identify an applicable rule for parsing the JSON object, wherein the applicable rule is based on one or more of the user input, the one or more quality record and the JSON object; parse the JSON object based on the identified applicable rule, wherein the parsing is performed by requesting an API corresponding to the identified applicable rule; feed the parsed JSON object to a large language model to obtain the analysis of the one or more quality record; and display the obtained analysis of the one or more quality record to the user.

The above summary is provided merely for the purpose of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below. Other features, aspects, and advantages of the subject will become apparent from the description, the drawings, and the claims.

### BRIEF DESCRIPTION OF THE DRAWINGS

The accompanying drawings constitute a part of the description and are used to provide further understanding of the present disclosure. Such accompanying drawings illustrate the embodiments of the present disclosure which are used to describe the principles of the present disclosure. The embodiments are illustrated by way of example and not by way of limitation in the figures of the accompanying drawings in which like references indicate similar elements. It should be noted that references to "an" or "one" embodiment in this disclosure are not necessarily to the same embodiment, and they mean at least one. In the drawings:
**Fig. 1** illustrates a system for performing processing of JSON objects and attached files corresponding to different quality records, in accordance with an embodiment of the present invention;
**Fig. 2** illustrates the steps executed by a system for performing processing of JSON objects and attached files corresponding to different quality records, in accordance with an embodiment of the present invention;
**Fig. 3** illustrates a system for retrieval of JSON objects and attached files based on a user input, in accordance with an embodiment of the present invention;
**Fig. 4** illustrates steps executed by a system for retrieval of JSON objects and attached files based on a user input, in accordance with an embodiment of the present invention;
**Fig. 5** illustrates a system for parsing of JSON objects using an API, in accordance with an embodiment of the present invention;
**Fig. 6** illustrates a system for conversion of data stored in attached files to textual data using an API, in accordance with an embodiment of the present invention;
**Fig. 7** illustrates a system for conversion of data stored in JSON objects and attached files to textual data using an API, in accordance with an embodiment of the present invention;
**Fig. 8** illustrates steps executed by a system for parsing of JSON objects and processing of attached files using an API, in accordance with an embodiment of the present invention;
**Fig. 9** illustrates a system for executing an LLM for analysis of data obtained from quality records, in accordance with an embodiment of the present invention; and
**Fig. 10** illustrates step executed by a system executing an LLM for analysis of data obtained from quality records, in accordance with an embodiment of the present invention.

### DETAILED DESCRIPTION OF THE INVENTION

The description that follows describes, illustrates and exemplifies one or more particular embodiments of the invention in accordance with its principles. This description is not provided to limit the invention to the embodiments described herein, but rather to explain and teach the principles of the invention in such a way that enables one of ordinary skill in the art to understand these principles and, with that understanding, be able to apply them to practice not only the embodiments described herein, but also other embodiments that may come to mind in accordance with these principles. The scope of the invention is intended to cover all such embodiments that may fall within the scope of the appended claims, either literally or under the doctrine of equivalents.

It should be noted that in the description and drawings, like or substantially similar elements may be labelled with the same reference numerals. However, sometimes these elements may be labelled with differing numerals, such as, for example, in cases where such labelling facilitates a clearer description. Additionally, the drawings set forth herein are not necessarily drawn to scale, and in some instances, proportions may have been exaggerated to more clearly depict certain features. Such labelling and drawing practices do not necessarily implicate an underlying substantive purpose. As stated above, the specification is intended to be taken as a whole and interpreted in accordance with the principles of the invention as taught herein and understood to one of ordinary skill in the art.

With respect to the exemplary systems, components and architecture described and illustrated herein, it should also be understood that the embodiments may be embodied by, or employed in, numerous configurations and components, including one or more systems, hardware, software, or firmware configurations or components, or any combination thereof, as understood by one of ordinary skill in the art. Accordingly, while the drawings illustrate exemplary systems including components for one or more of the embodiments contemplated herein, it should be understood that with respect to each embodiment, one or more components may not be present or necessary in the system.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

The present invention relates to a system and method for performing different types of analysis including generation of summaries of quality records. Quality records are used for storing data relating to quality of a product or service manufactured or offered by a plant, factory, service provider, or manufacturing industry. The quality records corresponding to a product or service may be created and maintained by the plant, factory, service provider, or manufacturing industry that creates the product or service, and the quality records may be stored in a database or server. There may be one or more quality records created with respect to a single product, wherein different quality records may be maintained for different batches of the same product. Further, in certain instances, multiple quality records may be maintained for different variants of the same product, wherein such quality records are maintained for the purpose of comparison of quality and performance of the variants.

For instance, in a factory producing pharmaceutical products, quality records may be used for storing information relating to the pharmaceutical products and quality tests performed on the pharmaceutical products. In such an instance, one or more quality records may be maintained with respect to specific product, and the quality record contains information relating to quality of the pharmaceutical product that may be determined during testing of the pharmaceutical product by the pharmaceutical factory. Further, quality records may also be maintained with respect to different variants of a specific pharmaceutical product, wherein the different variants may relate to variants of the product obtained corresponding to different ratios of ingredients used therein.

Hence, the quality records aid in recording information associated with different aspects relating to quality of products created in a plant, factory, service provider, or manufacturing industry. Generally, the quality records are maintained using JSON objects, wherein the JSON objects are used for storing the data related to quality of the products. The quality records may contain one or more pure JSON objects, and in certain instance hybrid quality records may be used for storing information relating to quality, wherein the hybrid quality records may be constituted by one or more JSON objects and one or more attached files. The attached files may be of different formats including PDF format.

When quality of a particular product is to be analyzed or summary of quality records of a product is to be generated, the quality records corresponding to the product are to be analyzed. Such analysis of quality records may be done manually or based on implementation of AI tools such as LLMs (large language models). However, since the data is stored in quality records as either JSON objects, attached files, or a combination of JSON objects and attached files, manual analysis or analysis based on implementation of LLMs becomes complex and inaccurate. Specifically, with respect to LLMs, an accurate analysis or summarization may not be obtained based on implementation of LLMs, since LLMs require inputs clearly defined in English, providing as much purpose and context as possible, to obtain optimal outputs.

Hence, analysis and summary generation corresponding to quality records may be performed by LLMs based on conversion of data stored in JSON objects and attached files of quality records into English language-based text, and providing such English language based-text as input to the LLM. The present invention relates to a system and method for conversion of data stored in JSON objects and attached files of quality records of a product to corresponding English language-based data, and performing analysis or generating summary of the quality records using an LLM based on the English language-based data provided as input to the LLM.

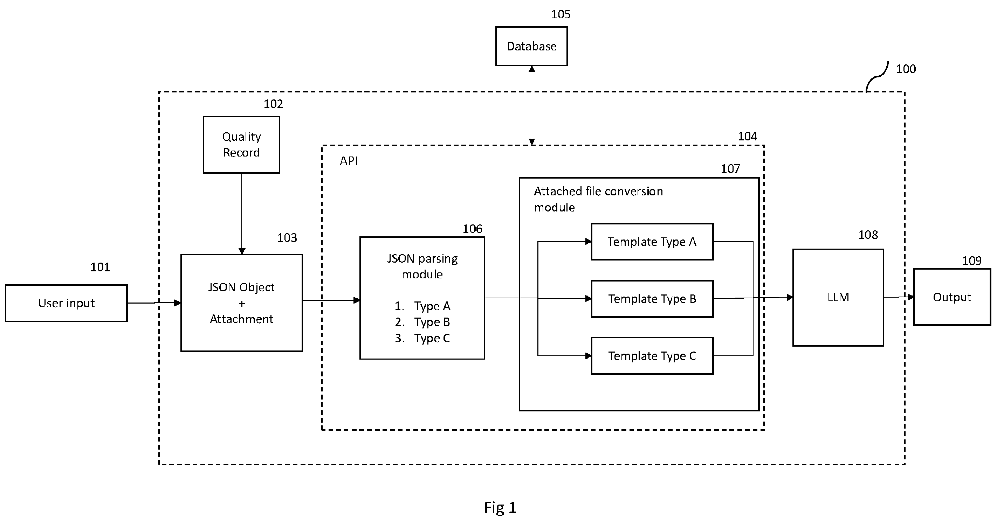

**Fig. 1** illustrates a system for performing processing of JSON objects and attached files corresponding to different quality records, in accordance with an embodiment of the present invention. The implementation of the system **100** proposed in the present invention involves the receipt of a user input **101** from a user of the system **100** relating to analysis or summarization to be performed on one or more quality records **102** based on the processing of one or more JSON files corresponding to the quality records **102.** Each of the quality records **102** may have one or more JSON objects **103.** The JSON objects **103** may have attached files of different file types. Based on the user input **101,** the quality records **102** to be analyzed, the JSON objects **103,** and the file type of the different attached files of the JSON objects **103,** the system **100** identifies applicable rules and templates for parsing of the JSON objects **103.** Once the applicable parsing rules are identified by the system **100,** each of the JSON objects **103** are parsed by requesting an API **104** (Application Programming Interface) corresponding to the identified applicable rule, and such an applicable rule includes the appropriate template for conversion of the data in the each of the JSON objects **103** into corresponding language-based textual data, and the API **104** provides an output having meaningful contextual text based on implementation using the templates and techniques specified in the identified applicable rule.

The contextual textual data generated by the API **104** may thereafter be further refined based on application of different template types by the API **104,** wherein the templates are applied for conversion of the attached files of the JSON objects **103** into language-based textual data. The conversion of the data stored in JSON objects **103** and the data in the attached files to the corresponding training ready text-based data enables the easy processing of such textual data by an LLM **108** (Large Language Model), where the textual data is provided as input to the LLM **108** for analysis and/or training. The analysis of the textual data corresponding to the one or more quality records **102** performed by the LLM **108** is provided to the users as an output **109** of the LLM **108.**

The user input **101** may be retrieved from the users based on implementation of a user interface, wherein the user interface may permit for efficient receipt of the user requirements in the form of user input **101.** The user input **101** may include the specific requirements of the user with respect to the functionality to be performed by the system **100,** and the requirements of the users may include a request for summarization of one or more quality records relating to a specific asset or product. The requirements of the user may also include functionalities such as analysis of quality of different assets or products developed by the manufacturing industry based on reference data stored in one or more of the quality records corresponding to the asset or product.

The user input **101** may be retrieved as a collection of different prompts based on options relating to possible queries provided by the system to the user via the user interface. The user input **101** may also be retrieved as a text-based query provided by the user, which may thereafter be processed to determine the specific functions or operations to be implemented so as to provide an output meeting the user requirements. For instance, the user input **101** provided by the user may be relating to generating a quality analysis of an asset or product developed on a particular day.

Based on the user input **101** provided by the user, the quality records **102** necessary to address the requirement of the user may be accessed. The quality records **102** corresponding to the different assets or products developed by a manufacturing industry may be stored in repositories, databases, or servers of the industry. Hence, the quality records **102** stored in repositories may be accessed by the system **100** based on the user input **101,** and the analysis of the quality records **102** for providing an output corresponding to the user input **101** is performed based on processing of the one or more JSON objects **103** associated with each of the quality records **102** accessed.

The quality management solution provided by the system **100** allows the quality records **102** relating to events like complaints, deviations, risks, CAPAs, change controls etc. to be persisted in hybrid formats like JSON and PDF file documents. Quality records **102** may be either pure JSON objects, or pure PDF files, or a combination of both. For instance, a hybrid quality record includes both JSON payload as well as file attachments associated with that record. Hence, each of the quality records **102** accessed may have one or more associated JSON objects **103** with different attached files, wherein the JSON objects **103** comprise language-independent data relating to the quality record. The quality records **102** comprised of purely JSON payload may not be easily processable by the LLM **108,** and the output obtained may not be satisfactory as the LLM **108** tends to operate best when the inputs are clearly defined in English language. Further, JSON objects **103** do not provide sufficient purpose and context for the determining of an accurate response by the LLM **108.**

Hence, the language independent data comprised in the JSON objects **103** and the included file attachments are first converted into meaningful and contextual language-based textual data for the training and execution of the LLM **108** so as to obtain accurate responses. The conversion of the JSON objects **103** and the included file attachments into contextual textual data is performed by the API **104** based on identification of different applicable rules associated with the different types of JSON object **103** and the different formats of the included file attachments. As the types of JSON objects **103** and formats of attached files may vary in different quality records **102,** the rules applicable with respect to the conversion of the JSON objects **103** and attached files corresponding to each of the quality records **102** may differ.

The applicable rules corresponding to the different JSON objects **103** and the different types and formats of the attached files define how the JSON objects **103** and the attached files are to be parsed so as to obtain meaningful language text. Different applicable rules are stored in a database **105** comprising different configuration of rules that define the parsing, and the configuration of rules are defined based on the nature and context of data stored in the JSON objects **103,** and the rules may be defined by SaaS (Software as a Service) provider providing a service based on analysis and processing of the quality records **102** or by customer's administrators. The applicable rules may be defined as templates, and the template to be applied is decided based on the metadata of each of the JSON objects **103** which are to be parsed. For instance, there may exist different metadata associated with the different JSON objects **103,** and each object may have a corresponding template definition stored along with applicable rules in the database **105.**

Hence, there exists a plurality of different applicable rules for the conversion of the JSON objects **103** and the attached files. The conversion of JSON objects **103** and the attached documents into language-based textual data is performed by an API **104,** wherein the API **104** used for performing the conversion is selected from a set of different APIs. The selection of the API **104** is based on the nature of data stored in the JSON objects **103** and the attached files. In some embodiments of the present invention, the different APIs may be accessed from a server, external source, or database based on identification of an applicable rule on receipt of a user input **101** an/or based on the JSON objects **103.**

The conversion of the JSON objects **103** and the attached files corresponding to the quality records **102** identified corresponding to the user input **101** are performed in stages by the API **104,** wherein the first stage of conversion involves converting the data stored in the JSON objects **103** to language-based text. The conversion of the JSON objects **103** into language-based textual data is performed by parsing of the JSON objects **103** using applicable rules including appropriate templates, and such a parsing is performed by a JSON parsing module **106.**

The JSON parsing module **106** identifies the applicable rules from the database **105** based on the type of data stored in the one or more JSON objects **103** to be parsed. The applicable rules identified by the JSON parsing module **106** based on the type of data stored in the JSON objects **103** include the different templates that are to be applied by the JSON parsing module **106** for parsing the JSON objects **103.** The language-based textual data obtained by the JSON parsing module **106** based on parsing using the applicable rules and templates would hence be in the format determined by the templates included in the applicable rules.

Hence, identification of the different rules that are applicable for parsing the JSON objects **103** and the attached files retrieved corresponding to the user requirements indicated by the user input **101** is performed by the JSON parsing module **106** of the API **104** prior to parsing of the JSON object **103.** Based on the different applicable rules identified, the JSON parsing module **106** may perform parsing of the each of the JSON objects **103** into contextual language-based textual data. The JSON parsing performed by the JSON parsing module **106** of the API **104** involves converting a JSON string into a structured language-based data, wherein the interpretation of the data stored in each of the JSON objects **103** are converted into contextual language-based textual data. The output of the parsing of the JSON objects **103** by the JSON parsing module **106** of the API **104** is a machine understandable semantically correct English texts which provides context regarding the data stored in the JSON objects **103** such that the contextual language-based textual data can be used for training of the LLM **108.**

The second stage of execution of the API **104** involves the conversion of data stored in the attached files of the JSON objects **103** into corresponding language-based textual data. Such a conversion is performed by a file conversion module **107** of the API **104** which identified the type of file which is to be converted, and retrieves an appropriate template from the database **105** for the conversion of the attached file. There may be one or more file attachments corresponding to one JSON object **103,** and the file conversion module **107** may be used for the conversion of each of the file attachments based on different templates retrieved corresponding to the file type of each attached file.

The output obtained from the API **104** used for a particular iteration of execution of the system **100** includes language-based textual data which includes data obtained by the conversion of JSON objects **103** into textual data based on parsing using applicable rules and the conversion of attached files of the JSON objects into corresponding textual data. The language-based textual data thus obtained by the execution of API **104** is based in English language, and is further processed to obtain vectors. The vectors generated from the language-based textual data is provided as input to the LLM **108,** and enables the implementation of the LLM **108** based on context regarding the data corresponding to the quality records **102** to be analyzed. The LLM **108** is used for performing analytic operations as required by user based on vectors generated from data obtained JSON objects **103** and attached files of the quality records **102,** wherein the quality records **102** under consideration correspond to the quality records of the product for which quality-based analytic operations are to be performed.

The LLM **108** used for performing analytic operations on the language-based textual data obtained from the quality records is obtained by the training of an LLM based on natural language in the context of the industry for which the system **100** is implemented. The LLM **108** may be trained prior to the execution of the system **100,** or may be continuously trained and tuned based on the language-based textual data generated by the API **104.** In certain embodiments of the present invention, the tuning of the LLM **108** prior to execution of the system **100** or during run-time of the system **100** is enabled by validation of an output **109** of the LLM **108** by users, wherein the validation may include an evaluation of the output **109** of the LLM **108** by the users, based on which the LLM **108** is tuned.

Hence, the implementation of the LLM **108** in real-time for performing analytics operations based on vectors extracted textual data obtained from the conversion of JSON objects **103** and attached files by the API **104** is used to obtain an output corresponding to the requirements communicated by the user by means of the user input **101.** The output **109** of the LLM **108** is provided to the user, and the output **109** of the LLM **108** may be of different types including summarization of quality records, analysis of quality of a particular asset or product based on corresponding quality records **102** etc. In certain embodiments of the present invention, the output **109** of the LLM **108** may be a combination of one or more different analytic operations performed on data obtained from the quality records **102.**

In certain embodiments of the present invention, the system **100** may also retrieve an evaluation of the output **109** of the LLM **108** from the users, based on which the LLM **108** may be fine-tuned so as to improve the accuracy of the LLM **108** for future execution of the system **100.** The evaluation may be provided by the user as a metric indicating their satisfaction with the received output, and the metric may include a qualitative value like rating, score etc. In certain embodiments of the present invention, the output of the API **104** and the LLM **108** may be stored in a database or repository for future reference or comparison of performance of a particular product or asset at a future instance.

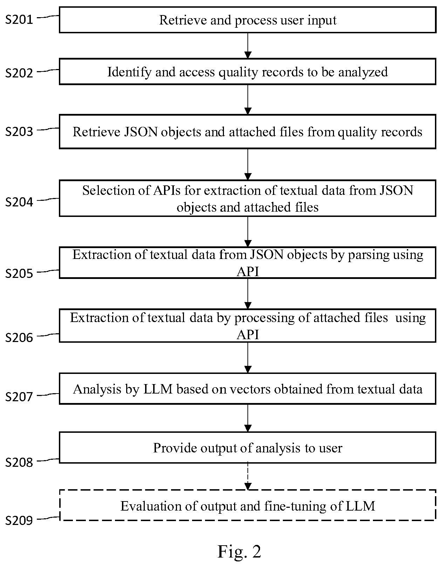

**Fig. 2** illustrates the steps executed by a system for performing processing of JSON objects and attached files corresponding to different quality records, in accordance with an embodiment of the present invention. The steps are executed by the system for providing an output in response to a user input requesting analysis of a quality record, and the output is provided based on data accessed from quality records. Firstly, at step **S201,** a user input is retrieved, and the user input indicates the analysis of one or more quality records that is required by the user. The user input may include the type of analysis that is to be performed such as summarization of quality records, analysis of quality of a product, comparison of quality of two or more products etc. The user input may also include indication regarding the one or more products for which analysis is to be performed.

The input may be received from the user as a combination of responses to different prompts offered to the user, or may be retrieved as a textual input in natural language from the user. In addition to the receipt of user input, step **S201** also includes the processing of the user input to obtain an understanding as to the functionality that is to be carried out and the different quality records to be analyzed. Such a processing of the user input may be required when the user input is received as a natural language-based textual input, wherein such textual input is required to be processed so as to obtain context regarding the analysis requested by the user.

At step **S202,** the processed user input is used to identify the quality records that are to be analyzed to provide the required output. The quality records may be stored in an external server or database maintained by the industry or factory that produces the product, and the required quality records may be retrieved based on the processed user input. One or more quality records may be maintained for a particular product, and hence, all the quality records corresponding to the product to be assessed are retrieved. In certain embodiments of the present invention, the user input may request the comparative analysis of two or more products, and hence, quality records for a plurality of products may be retrieved at step **S202.**

At step **S203,** the JSON objects and attached files of the quality records retrieved may be accessed for processing. The quality records corresponding to a product may include either one or more JSON objects, file attachments, or a combination of JSON objects and file attachments. The quality of different products may be recorded in the quality records by means of such JSON objects and file attachments, and hence analysis of quality of the product necessitates accessing the JSON objects and attachments of the quality records. The JSON objects of quality records may comprise different types of data and the attached files of the JSON objects may be of different formats or types.

Hence, there exists different rules or techniques for the conversion of different types of JSON object or different format of attached files, and such a conversion is performed by an appropriate API selected from a set of different APIs. The selection of an appropriate API from a set of different APIs is performed at step **S204,** and the selection is based on the types of JSON objects and attached files to be processed. In certain embodiments of the present invention, step **S204** may involve selection of two APIs, wherein one API is used for the conversion of data stored in JSON objects into language-based textual data, and the second API is used for the conversion of data in attached files into language-based textual data.

Step **S205** involves the conversion of data stored in the JSON objects corresponding to the quality records to be analyzed, and the conversion of data stored in the JSON objects into language-based textual data is performed by a JSON parsing module of the selected API based on the application of configuration or conversion rules applicable to the different types of JSON objects to be converted. Hence, step **S205** involves identification of different conversion rules applicable to the different types of JSON files to be processed for analysis of the quality records, and the applicable conversion rules may be identified by the JSON parsing module from a set of rules that are stored in a database accessed by the API.

Step **S205** also includes application of the applicable conversion rules by the JSON parsing module of the API for performing parsing of the JSON objects, and the output of the parsing performed is a language-based textual data that provides context regarding the quality record. The applicable rules used for the conversion of the data contained in the JSON objects into language-based textual data includes templates corresponding to the type of JSON object, and the templates aids in defining the format of the language-based textual data obtained after parsing of the JSON object.

At step **S206,** a file conversion module of the API is used for converting the data stored in the attached files into a language-based textual data, and the conversion is based on different templates. The different templates used for conversion of attached files is based on the different file types that may be required to be converted, and the different templates used for converting attached files may be stored in a database, and accessed by the file conversion module of the API at run-time. The different rules used in step **S205** and step **S206** for the conversion of data stored in JSON objects and attached files of quality records may be predefined, and stored in the same database, or in separate databases.

The language-based textual data obtained corresponding to conversion of data stored in JSON objects at step **S205** and the conversion of data stored in attached files at step **S206** by the API are combined at step **S207** to obtain a final language-based textual data. The final language-based textual data is converted into vectors at step **S207,** and the vectors extracted are used by the LLM for performing analysis of the quality records, or for generating a summary of the quality records. In certain embodiments of the present invention, the step **S207** also includes the tuning of the LLM, wherein the LLM is tuned using vectors extracted from the language-based textual data. The LLM is used for performing analysis of the quality records based on processing of the vectors provided as input to the LLM. The analysis performed by the LLM may include summarization of quality records relating to particular product, analysis of quality of a product, comparative analysis of quality of two products etc. Such output of the LLM is provided as output to the users at step **S208.**

In certain embodiments of the present invention, the output provided to the user at step **S208** may just be a brief summarization as required by the user input. In other embodiments, the user input may require for providing a more comprehensive output regarding the quality of the product, and the output may be provided a dashboard indicating different factors analyzed during the processing of vectors by the LLM. In other embodiments of the present invention, the output provided at step **S208** may be a comparative analysis of the one or more products.

In certain embodiments of the present invention, there may also be an evaluation of the output of the system received from the user at step **S209,** wherein the evaluation is used for fine-tuning the LLM used for performing analytic operations of data obtained from the quality records.

In certain embodiments of the present invention, the system may be implemented as a compilation of multiple systems, each system performing specific operations relating to the analysis of quality records. The plurality of systems that may be used for analysis of quality records include a system for retrieval of JSON objects and attached files based on user input, system for implementation of API for JSON objects, system for implementation of API for attached files, and system for execution of LLM.

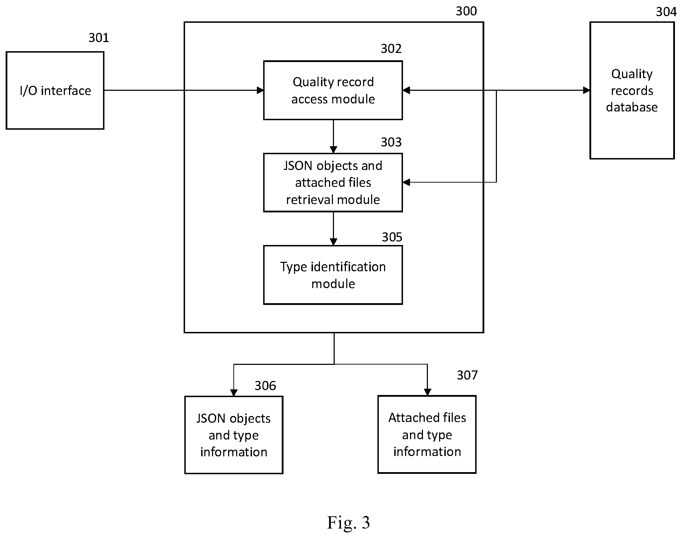

**Fig. 3** illustrates a system for retrieval of JSON objects and attached files based on a user input, in accordance with an embodiment of the present invention. The system **300** includes an I/O (input/output) interface **301,** a quality record access module **302,** a JSON objects and attached files retrieval module **303,** and a quality records database **304.** Implementation of the system **300** is initiated based on receipt of a user input at the I/O interface **301.** The I/O interface **301** enables portability of the system **300,** wherein the I/O interface **301** allows the system **300** to be remotely connected to the user devices used for providing user input. The I/O interface **301** is also used for creating an interactive interface for the receipt of the user requirements in the form of user input, wherein the interactive interface includes a plurality of different choices that may be offered to the user relating to the analysis of one or more quality records that is to be performed, and the user input received is a compilation of the responses to the different choice-based prompts offered to the user. The choices offered to the user at the I/O interface **301** may include choice relating to the one or more products for which quality analysis is to be performed, and choice relating to a variety of analysis operations that may be performed on the quality records of the one or more products. In certain embodiments of the present invention, the user input retrieved by the I/O interface **301** is an input provided as text by the user, wherein the text contains one or more sentences describing the analysis that is required to be performed.

The user input retrieved by the I/O interface **301** is provided to the quality record access module **302,** and the quality record access module **302** processes the user input to determine the one or more quality records to be accessed to provide the required output to the user. On determining the quality records to be accessed, the quality record access module **302** accesses the corresponding quality records from a quality records database **304,** wherein the quality records database **304** contains all the quality records generated by a factory or industry producing the products for which quality record analysis may be performed.

The quality records database **304** may be maintained by the factory or industry that generates quality records for their different products, and the quality records database **304** may be stored in a server or repository that is remotely accessible by the quality record access module **302.** Hence, the quality record access module **302** accesses the quality records required for addressing the user requirements. In certain embodiments, the quality records required for addressing the user requirements may not be present in the quality records database **304,** and hence may not be accessible by the quality record access module **302.** In such embodiments, the system **300** may provide an output to the users via the I/O interface **301,** the output indicating an error arising due to unavailability of required quality records.

The quality records accessed by the quality record access module **302** is thereafter provided to the JSON objects and attached files retrieval module **303.** Each quality record may have one or more JSON objects and one or more attached files of different formats. The JSON objects of the quality record may include pure JSON objects, or a hybrid of JSON objects and attached files. The JSON objects and attached files related to a single quality record may contain data relating to the quality of the product for which the quality record is created. Hence, the data relating to quality of the product is stored in the JSON objects and the attached files of the quality records of the product, and the JSON objects and attached files retrieval module **303** is used for retrieving the JSON objects and attached files from which quality related data is to be obtained.

The JSON objects and attached files may be of different types or formats. Thus, it is essential to identify the different types of JSON objects and the different types and formats of attached files that are retrieved corresponding to the user input, so as to ensure that the different techniques or rules applicable to the conversion of data stored in different types of JSON objects and attached files are identified. The identification of the different types of JSON objects and attached files is performed by a type identification module 305, and the identification may be based on the different types of JSON objects and the different types and formats of attached files that are used in the industry for storing of data in quality records. The output of the system **300** is the JSON objects along with identified type information **306** and the attached files to be processed along with the identified type information **307.**

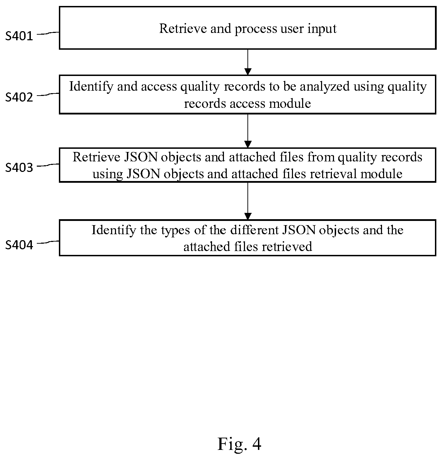

**Fig. 4** illustrates steps executed by a system for retrieval of JSON objects and attached files based on a user input, in accordance with an embodiment of the present invention, in accordance with an embodiment of the present invention. Firstly, at step **S401,** a user input is retrieved from a user of the system, and the user input indicates the analysis of one or more product that is required by the user. The user input may include the type of analysis that is to be performed such as summarization of quality records, analysis of quality of a product, comparison of quality of different products etc. The user input may also include indication regarding the one or more products for which analysis is to be performed.

The user input may be received from the users as a combination of responses to different prompts offered to the user, or may be retrieved as a textual input in natural language from the user. In addition to the receipt of user input, step **S401** also includes the processing of the user input to obtain an understanding as to the functionality that is to be carried out by the system and the different quality records to be analyzed. Such a processing of the user input may be required when the user input is received as a natural language-based textual input, wherein such textual input is required to be processed so as to obtain context regarding the analysis requested by the user.

At step **S402,** the processed user input is used to identify the quality records that are to be analyzed to provide the required output. The quality records may be stored in an external server or database maintained by the industry or factory that produces the product, and the required quality records may be retrieved based on the processed user input. One or more quality records may be maintained for a particular product, and hence, all the quality records corresponding to the product to be assessed are retrieved. In certain embodiments of the present invention, the user input may request the comparative analysis of two or more products, and hence, quality records for a plurality of products may be identified at step **S402.**

Step **S402** also involves the accessing of the identified quality records, and the quality records accessed may have one or more JSON objects and attached files storing essential information relating to the quality of the corresponding product. At step **S403,** the JSON objects and attached files of the quality records may be retrieved for processing. The quality records corresponding to a product may include either one or more JSON objects, file attachments, or a combination of JSON objects and file attachments. The quality of different products may be recorded in the quality records by means of such JSON objects and file attachments, and hence analysis of quality of the product necessitates accessing the JSON objects and attachments of the quality records. The JSON objects of quality records may comprise different types of data and the attached files of the JSON objects may be of different formats or types.

Hence, JSON objects and the quality records of the quality records are retrieved at step **S403,** and there may be a plurality of different types of JSON objects and attached files retrieved. At step **S404,** a type identification module may be used for identifying the type of the JSON objects and the file types of the attached files. The output obtained after steps **S401** to **S404** includes the different JSON objects and attached files of the quality records to be analyzed to provide a quality analysis output required by a user, and the information relating to the types of the JSON objects and the attached files.

The JSON objects and attached files that are retrieved, and the data relating to the type of the JSON objects and attached files identified may be used for the extraction of data stored therein in language-based text form, based on execution of a system for implementation of API for extraction of data stored in JSON objects and the extraction of data stored in attached files, such that the extracted data is in language-based textual format.

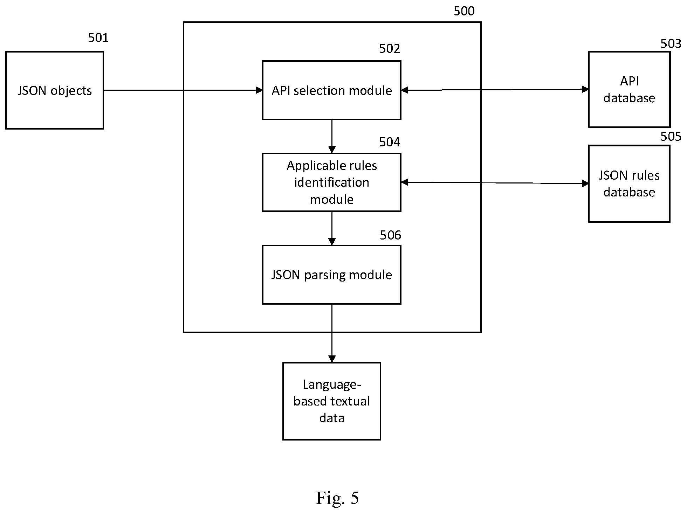

In certain embodiments, the data stored in the different JSON objects retrieved based on the user input is converted into language-based textual data using an appropriate API selected from a set of different APIs, wherein such selection of API is based on the different JSON objects to be parsed to obtain the required language-based textual data. **Fig. 5** illustrates a system for parsing of JSON objects using an API, in accordance with an embodiment of the present invention. The JSON objects to be parsed by an API for obtaining language-based textual data may be obtained based on retrieval of JSON objects from the quality records accessed for analysis corresponding to a user input. In certain embodiments of the present invention, the JSON objects to be parsed may be directly provided by the user.

Hence, the system **500** for parsing of JSON objects receives as input the JSON objects **501** to be parsed. An API selection module **502** of the system **500** is used for selecting an appropriate API for the parsing of the JSON objects **501** for extracting language-based textual data. The appropriate API is selected from an API database **503,** where the API database **503** is used for storing the different types of APIs that may be used for JSON parsing. The appropriate API is selected by the API selection module **502** based on the different types of JSON objects **501** to be parsed by the system **500.** In some embodiments, the JSON objects **501** received as input also contains information relating to the type of the JSON objects. In other embodiments, the type of the JSON objects **501** may be identified by the API selection module **502** prior to the selection of the appropriate API.

After the API for JSON parsing is selected by the API selection module **502,** the selected API is used by the applicable rules identification module **504** for identification of the different applicable rules for conversion of the data stored in the JSON objects **501** into language-based textual data, and the applicable rules for such a conversion is selected by the applicable rules identification module **504** from a set of different conversion rules stored in a JSON rules database **505.** The different conversion rules stored in the JSON rules database **505** may be pre-defined by a SaaS (Software as a Service) provider providing a service based on analysis and processing of the quality records or by customer's administrators. The conversion rules defined and stored in the database **505** include techniques and templates for the parsing of each of the JSON objects **501** so as to convert the data stored therein into language-based textual data. The format in which the language-based textual data is obtained by the parsing of each of the JSON object **501** by the API depends on the templates provided by the corresponding applicable conversion rules.

Hence, based on the applicable rules and templates identified by the applicable rules identification module **504,** a JSON parsing module **506** performs parsing of the JSON objects **501** using the API to obtain the language-based textual data in the required format. Language-based textual data obtained as output of the JSON parsing module **506** provides context regarding the data stored in the JSON objects **501** of the quality record, and may be used for the training or implementation of an LLM. The LLM may be executed based on vectors obtained from the textual data, and the LLM may be used to perform analysis of the quality records from which the textual data was generated.

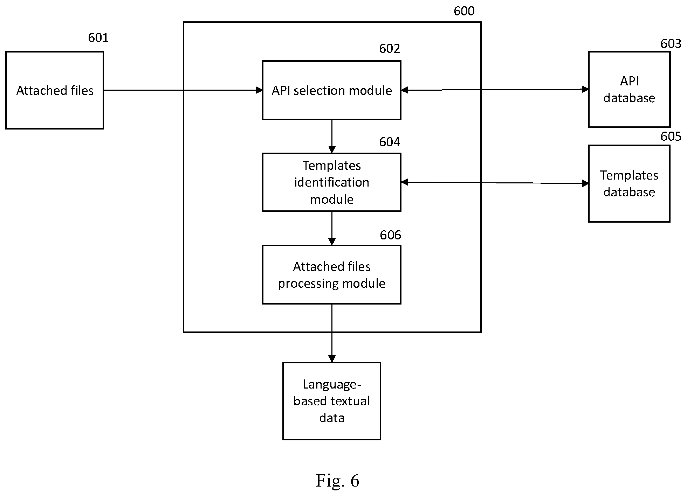

In addition to a system for parsing of JSON objects using an API, in certain embodiments of the present invention, a system may be used for the conversion of data stored in attached files of JSON objects into language-based textual data. **Fig.6** illustrates a system for conversion of data stored in attached files to textual data using an API, in accordance with an embodiment of the present invention. The attached files from which data is to be retrieved and converted into language-based textual data may be obtained based on retrieval of attached files from the quality records accessed for analysis corresponding to a user input. In certain embodiments of the present invention, the attached files to be parsed may be directly provided by the user.

There may be a plurality of different types and formats of attached files of a quality record from which textual data is to be retrieved. For a particular quality record, there may be one or more attached files, and the attached files may be of different types and different formats. The system **600** is used for retrieval of textual data from the attached files of different types and formats, and receives as input the attached files **601** from which textual data is to be generated. An API selection module **602** of the system **600** is used for selecting an appropriate API for the generating language-based textual data from the attached files **601.** The appropriate API is selected from an API database **603,** where the API database **603** is used for storing the different types of APIs that may be used for processing the attached files **601** for extracting language-based textual data. The appropriate API is selected by the API selection module **602** based on the different types and formats of attached files **601** to be processed by the selected API. In some embodiments, the attached files **601** received as input also contains information relating to the type and/or format of the attached files **601.** In other embodiments, the type and format of the attached files **602** may be identified by the API selection module **602** prior to the selection of the appropriate API.

After the API for the processing of the attached files **601** is selected by the API selection module **602,** the selected API is used by a template identification module **604** for identification of the different templates that may be used for the conversion of the data stored in the attached files **601** into corresponding language-based textual data. The templates that can be applied for the attached files **601** to be processed may be selected the template identification module **604** from a set of different templates stored in a templates database **605.** The different templates stored in the templates database **605** may be pre-defined based on the different types and formats of attached files **601** generally used in the industry. The format in which the language-based textual data is obtained by processing of the attached files **601** by the API depends on the templates applied.

Hence, based on the application of the templates identified by the template identification module **604,** an attached files processing module **606** performs processing of the attached files **601** using the selected API to obtain the language-based textual data in the required format. Language-based textual data obtained as output of the attached files processing module **606** using the templates provides context regarding the data stored in the attached files **601** of the quality record, and may be used for the training or implementation of an LLM. The LLM may be executed based on vectors obtained from the textual data, and the LLM may be used to perform analysis of the quality records from which the textual data was generated.

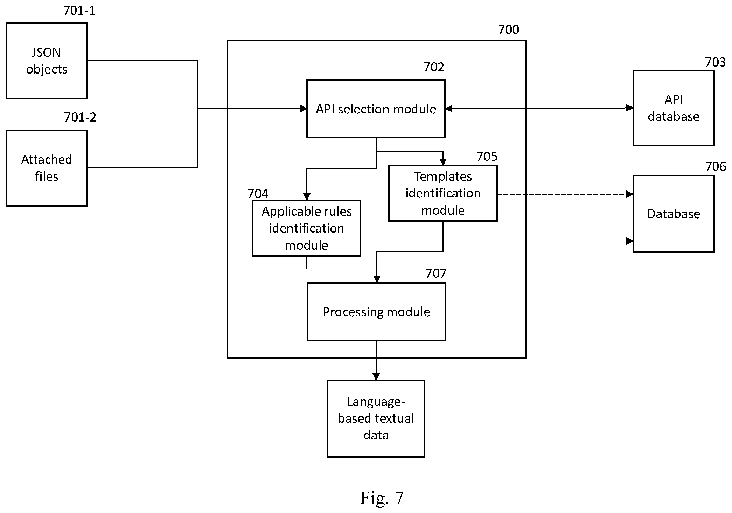

In certain embodiments of the present invention, the parsing of the JSON objects and the processing of the attached files of one or more quality records to be analyzed corresponding to a user input may be performed using a single API. **Fig.7** illustrates a system for conversion of data stored in JSON objects and attached files to textual data using an API, in accordance with an embodiment of the present invention. The JSON objects and the attached files from which data is to be retrieved and converted into language-based textual data may be obtained based on retrieval of JSON objects and attached files from the quality records accessed for analysis corresponding to a user input. In certain embodiments of the present invention, the JSON objects to be parsed and the attached files to be processed may be directly provided by the user.

There may be different types of JSON objects and attached files from which textual data is to be retrieved. For a particular quality record, there may multiple JSON objects and attached files. The system **700** is used for retrieval of textual data from the JSON objects and the attached files, and receives as input the different JSON objects **701-1** and the different attached files **701-2** from which textual data is to be generated. An API selection module **702** of the system **700** is used for selecting an appropriate API for the generating language-based textual data from the JSON objects **701-1** and attached files **701-2.** The appropriate API is selected from an API database **703,** where the API database **703** is used for storing the different types of APIs that may be used for processing the JSON objects **701-1** and the attached files **701-2** for extracting language-based textual data. The appropriate API is selected by the API selection module **702** based on the different types of JSON objects **701-1** to be parsed and the different types and formats of attached files **701-2** to be processed by the selected API. In some embodiments, the JSON objects **701-1** received as input may also contain information relating to the types of the JSON objects. Further, in some embodiments, the attached files **701-2** received as input may also contain information relating to the different types and the different formats of the attached files. In other embodiments, the type and format of the JSON objects **701-1** and the attached files **701-2** may be identified by the API selection module **702** prior to the selection of the appropriate API.

After the API for parsing of the JSON objects **701-1** and the processing of the attached files **701-2** is selected from the API database **703** by the API selection module **702,** the selected API is used by an applicable rules identification module **704** and a templates identification module **705** for identification of the different applicable rules corresponding to the JSON objects to be parsed, and for the identification of the different templates that may be used for the conversion of the data stored in the attached files into corresponding language-based textual data. The applicable rules for the parsing of the JSON objects **701-1** may be selected by the applicable rules identification module **704** from a set of different applicable rules stored in a database **706.** Further, the templates for processing of the attached files **701-2** may be selected by the templates identification module **705** from a set of different templates stored in a database **706.**

The different conversion rules stored in the database **706** may be pre-defined by a SaaS (Software as a Service) provider providing a service based on analysis and processing of the quality records or by customer's administrators. The applicable rules for conversion of data in JSON objects, defined and stored in the database **706,** include techniques and templates for the parsing of each of the JSON objects **701-1** so as to convert the data stored therein into language-based textual data. The format in which the language-based textual data is obtained by the parsing of each of the JSON objects **701-1** by the API depends on the templates provided by the corresponding applicable conversion rules. Further, the different templates stored in the database **706** may be pre-defined based on the different types and formats of attached files generally used in the industry. The format in which the language-based textual data is obtained by processing of the attached files **701-2** by the API depends on the templates applied.

Hence, based on the applicable rules and templates identified by the applicable rules identification module **704** and the templates identification module **705,** a processing module **707** performs parsing of the JSON objects **701-1** and the processing of the attached files **701-2** using the selected APIs to obtain the language-based textual data in the required format. Language-based textual data obtained from the processing module 707 provides context regarding the data stored in the JSON objects and the attached files of the quality record, and may be used for the training or implementation of an LLM. The LLM may be executed based on vectors obtained from the textual data, and the LLM may be used to perform analysis of the quality records from which the textual data was generated.

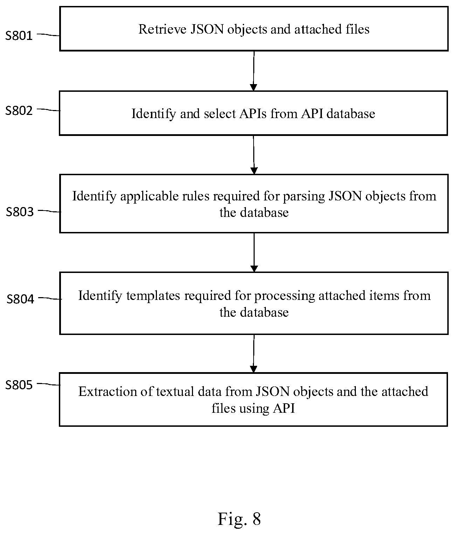

**Fig.** 8 illustrates steps executed by a system for parsing of JSON objects and processing of attached files using an API, in accordance with an embodiment of the present invention. Firstly, step **S801** involves retrieving the JSON objects and attached files from which language-based textual data is to be extracted. The JSON objects and attached files may be provided by the users, or may be retrieved by a system from the quality records of a product corresponding to which quality information in textual form is to be extracted from the JSON objects and attached files. At step **S802,** APIs are to be selected from a set of different APIs stored in an API database by an API selection module, wherein the selection of APIs involves selecting APIs appropriate for parsing of the JSON objects and the processing of the attached files.

In certain embodiments, the API selection module may select one API for the parsing of the JSON objects and the processing of the attached files. In other embodiments, the API selection module may select one API for the parsing of the JSON objects and one API for the processing of the attached files. After the one or more APIs are selected from the API database in step **S802,** the conversion rules for parsing of JSON objects and the templates for processing of the attached files are identified in steps **S803** and **S804.**

Step **S803** involves the identification of the applicable rules for conversion data stored in JSON objects into textual data based on parsing, wherein the identification and selection of the applicable rules are performed by the applicable rules identification module. The applicable rules identification module identifies the rules applicable to the JSON objects from a set of different rules stored in a database. The applicable rules may be pre-defined by a SaaS (Software as a Service) provider providing a service based on analysis and processing of the quality records or by customer's administrators. The rules stored in the database include techniques and templates for the parsing of the JSON object so as to convert the data stored therein into language-based textual data. The format in which the language-based textual data is obtained by the parsing of the JSON object by the API depends on the templates provided by the corresponding applicable conversion rules.

Step **S804** involves the identification of the templates required for processing of data stored in the attached files into a text form, wherein the identification and selection of the templates are performed by templates identification module. The templates identification module identifies the different templates from a set of different templates stored in a template database, such that the selected templates can be used to process the data stored in the attached files of different types and formats into textual data as required for analysis by an LLM. The different templates stored in the templates database may be pre-defined based on the different types and formats of attached files generally used in the industry. The format in which the language-based textual data is obtained by processing of the attached files by the API depends on the templates applied.

Based on the rules and templates identified at step **S803** and step **S804,** the APIs selected at step **S802** are implemented at step **S805** to obtain language-based textual data corresponding to data stored in the JSON objects and the attached files.

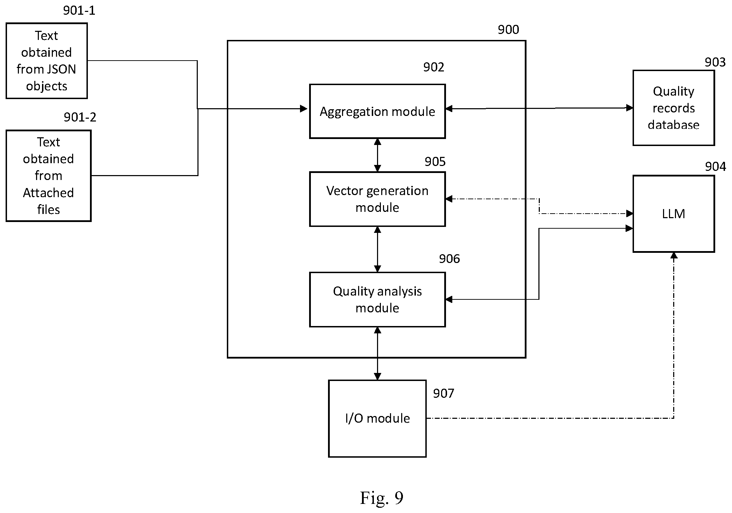

Hence, the language-based textual data generated based on the parsing of JSON objects and the processing of attached files corresponding to quality records may be used for the execution of an LLM trained to perform different types of analysis of data obtained from quality records. **Fig. 9** illustrates a system for executing an LLM for analysis of data obtained from quality records, in accordance with an embodiment of the present invention. The system **900** receives as inputs the language-based textual data from JSON objects **901-1** and language-based textual data from attached files **901-2.** An aggregation module **902** is used for combining both the inputs to obtain a final language-based textual data that provides complete context regarding the contents of a quality record. In some embodiments, the aggregation module **902** may access a quality records database **903** maintained by the industry or factory that creates the product for which quality analysis is being performed. The quality records database **903** may contain additional information saved by the industry relating to the product that may be used for generating the final language-based textual data used by the LLM **904** for performing analytic operations relating to the product.

The final language-based textual data generated by the aggregation module **902** is provided as input to a vector generation module **905** that generates vectors from the final language-based textual data for the execution of the LLM **904.** The LLM **904** may be trained and fine-tuned prior to the execution of system **900** using vectors and data corresponding to different quality records of different products. In certain embodiments of the present invention, the LLM **904** may be fine-tuned in real-time using the vectors generated by the vector generation module **905.**

In certain embodiments of the present invention, the vectors may be generated by the vector generation module **905** based on implementation of the LLM **904.** In other embodiments of the present invention, the vectors may be generated by the vector generation module **905** based on the implementation of a dedicated LLM or AI model, which may be trained in real-time or prior to the execution of the system **900.** The vectors generated by the vector generation module **905** are provided to the quality analysis module **906,** and the quality analysis module **906** performs different types of analytic operations using the LLM **904** with the vectors provided as input. The types of analytic operations that may be performed by the quality analysis module **906** may include summarization of one or more quality records corresponding to a product based on vectors generated from the one or more quality records, the analysis of quality of a product based on vectors generated from the associated quality records, comparative analysis of two or more products based on vectors generated from quality records associated with the two or more products etc.

The particular analytic operation to performed in one iteration of the system 900 by the quality analysis module **906** using the LLM **904** is determined based on the user requirement communicated by means of a user input, which may be retrieved by the quality analysis module **906** for executing the LLM **904.** In certain embodiments of the present invention, the user input may be retrieved from the user by means of an I/O module **907.** The output obtained from the LLM **904** corresponding to the operation of the quality analysis module **906** may be provided as output to the users by means of the I/O module **907.** In certain embodiments of the present invention, the output may be provided by the I/O module **907** as a dashboard indicating the different results obtained by the analysis performed on the vectors associated with the one or more products as required by the user. In other embodiments where the user input required for generation of a summary of quality records, the summary generated by the LLM **904** is provided to the user by the I/O module **907.**

In certain embodiments of the present invention, the I/O module **907** may be used by the users to provide an evaluation of the output received at the I/O module 907, and the evaluation may be provided as score or metric indicating the satisfaction of the user with respect to the accuracy of the output. The evaluation provided by the user at the I/O module **907** may be used for further tuning the LLM **904** for improved performance in future iterations.

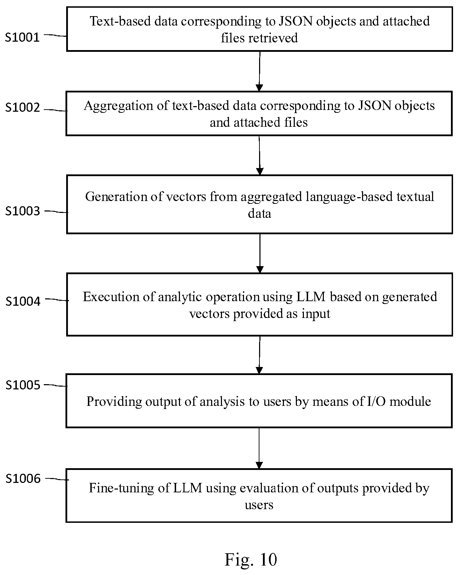

**Fig. 10** illustrates steps executed by a system executing an LLM for analysis of data obtained from quality records, in accordance with an embodiment of the present invention. At step **S1001,** data in text form corresponding to JSON objects and attached files are received by the system. The data in text form may be obtained from a system used for extracting data stored in JSON objects and attached files of a quality record in text form. At step **S1002,** the text data corresponding to JSON objects and text data corresponding to attached files are aggregated to obtain a final language-based textual data to be analyzed by an LLM. The final language-based textual data is aggregated in such a manner by an aggregation module so as to obtain full context regarding the quality information stored in the quality record from which the JSON objects and attached files were retrieved.

At step **S1003,** the language-based textual data obtained by the aggregation module is processed by a vector generation module to create vectors. In certain embodiments of the present invention, the vectors generated by the vector generation module may be used for training the LLM used performing the analytic operations requested by the user. At step **S1004,** the vectors generated by the vector generation module are used as inputs to the LLM for performing analytics operations of the product corresponding to which the information in quality records was extracted in textual form and vectorized. The analytic operations performed by the LLM at step **S1004** is as per the requirements raised in a user input, and analytic operations may be one or more of summary generation, quality analysis of a product, or comparative analysis of two of more products.

The outcome of the analysis performed by the LLM at step **S1004 is** provided to the users at step **S1005** by means of an I/O module, and the output may be customized depending on the user input. In certain embodiments of the present invention, evaluation of the output is performed by the users and shared by means of the I/O module at step **S1006,** and the evaluation shared is used for fine-tuning the LLM and improving the accuracy of analysis performed by the LLM.

Hence, the conversion of JSON objects and attached files of quality records of products into English language-based textual data, which is further vectorized and used by an LLM for performing analysis or summary generation of quality records is proposed in the present invention. In certain embodiments of the present invention, the proposed system may also be used for the analysis of quality records used to store information relating to complaints provided by users of a product. In such embodiments, a quality record may contain JSON objects and attached files corresponding to one or more complaints relating to a product, raised by a user of the product. In such embodiments, the proposed system may be used to generate a summary of the complaint raised, or to perform analysis of the information relating to the complaint stored in the quality record.

In some embodiments of the present invention, the system may be implemented so as to facilitate a question-answer based interaction between a user and the system, wherein the analysis of one or more quality records of the product relating to which the question was raised may be provided as an answer to the user. In such embodiments, the question raised by the user may also be processed, wherein the processing involves generating vector embedding using an LLM so as to perform similarity searches in a database containing information relating to prior questions raised and answers generated, so as to find answers that may be used to enable the analysis of the quality records performed corresponding to the question raised at that particular instance.

An embodiment of the invention may be an article of manufacture in which a machine-readable medium (such as microelectronic memory) has stored thereon instructions which program one or more data processing components (generically referred to here as a "processor") to perform the operations described above. In other embodiments, some of these operations might be performed by specific hardware components that contain hardwired logic (e.g., dedicated digital filter blocks and state machines). Those operations might alternatively be performed by any combination of programmed data processing components and fixed hardwired circuit components. Also, although the discussion focuses on uplink medium control with respect to frame aggregation, it is contemplated that control of other types of messages are applicable.

In the above description, for purposes of explanation, numerous specific details are set forth in order to provide a thorough understanding of the present systems and methods. It will be apparent the systems and methods may be practiced without these specific details. Reference in the specification to "an example" or similar language means that a particular feature, structure, or characteristic described in connection with that example is included as described, but may not be included in other examples.

An interface may be used to provide input or fetch output from the system. The interface may be implemented as a Command Line Interface (CLI), Graphical User Interface (GUI). Further, Application Programming Interfaces (APIs) may also be used for remotely interacting with edge systems and cloud servers.

A processor may include one or more general purpose processors (e.g., INTEL^{®} or Advanced Micro Devices^{®} (AMD) microprocessors) and/or one or more special purpose processors (e.g., digital signal processors or Xilinx^{®} System On Chip (SOC) Field Programmable Gate Array (FPGA) processor), MIPS/ARM-class processor, a microprocessor, a digital signal processor, an application specific integrated circuit, a microcontroller, a state machine, or any type of programmable logic array.

A memory may include, but is no limited to, non-transitory machine-readable storage devices such as hard drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

The terms factory, plant, manufacturing industry, and service provider have been used interchangeably throughout the draft and corresponds to an enterprise comprising infrastructure used for generating a product or service, the quality of which may be analysed by the system and method proposed herein.

The terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C." An exception to this definition will occur only when a combination of elements, functions, steps or acts are in some way inherently mutually exclusive.

Any combination of the above features and functionalities may be used in accordance with one or more embodiments. In the foregoing specification, embodiments have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set as claimed in claims that issue from this application, in the specific form in which such claims issue, including any subsequent correction.

## Claims

1. A system for handling of JSON objects by a large language model, comprising:
one or more processors;
a memory; and
one or more programs stored in the memory, the one or more programs comprising instructions configured to:
receive a user input requesting an analysis of one or more quality records;
extract the one or more of quality records, wherein each quality record comprises one or more JSON objects;
identify an applicable rule for parsing each of the one or more JSON objects, wherein the applicable rule is based on one or more of the user input, the one or more quality records, and the JSON objects;
parse each of the one or more JSON objects based on the identified applicable rule, wherein the parsing is performed by requesting an API corresponding to the identified applicable rule;
feed the parsed JSON objects to the large language model to obtain the analysis of the one or more quality records; and
display the obtained analysis of the one or more quality records to the user.

2. The system of claim 1, wherein the instructions are further configured to:
extract text of one or more attachments of the one or more JSON objects by one or more pre-defined templates.

3. The system of claim 2, wherein the text extracted from the one or more attachments of the one or more JSON objects is combined with the parsed JSON objects to obtain a vector text of the JSON objects.

4. The system of claim 1, wherein the one or more quality records comprise complaints, deviations, risks, and change controls.

5. The system of claim 1, wherein the obtained analysis of the quality records comprises summarization of the quality records, questions and answers of the quality records using a virtual assistant.

6. The system of claim 1, wherein the API corresponding to the identified applicable rule is based on metadata of the one or more JSON objects.

7. The system of claim 1, wherein the large language model is trained offline, and the parsed JSON objects are fed to the large language model in runtime.

8. The system of claim 7, wherein the large language model is further trained by the user input and the obtained analysis of the one or more quality records.

9. A method comprising:
receiving a user input requesting an analysis of one or more quality records;
extracting the one or more quality records, wherein each quality record comprises one or more JSON objects;
identifying an applicable rule for parsing each of the one or more JSON objects, wherein the applicable rule is based on one or more of the user input, the one or more quality records, and the JSON objects;
parsing each of the one or more JSON objects based on the identified applicable rule, wherein the parsing is performed by requesting an API corresponding to the identified applicable rule;
feeding the parsed JSON objects to a large language model to obtain the analysis of the one or more quality records; and
displaying the obtained analysis of the one or more quality records to the user.

10. The method of claim 9, further comprising:
extracting text of one or more attachments of the one or more JSON objects by one or more pre-defined templates.

11. The method of claim 10, wherein the text extracted from the attachments of the one or more JSON objects is combined with the parsed JSON objects to obtain a vector text of the JSON objects.

12. The method of claim 9, wherein the obtained analysis of the quality records comprises summarization of the quality records, questions and answers of the quality records using a virtual assistant.

13. The method of claim 9, wherein the API corresponding to the identified applicable rule is based on metadata of the one or more JSON objects.

14. The method of claim 9, wherein the parsing of the one or more JSON objects provides a meaningful contextual text.

15. A non-transitory computer-readable storage medium comprising computer program code for execution by one or more processors of an apparatus, the computer program code configured to, when executed by the one or more processors, causes the apparatus to:
receive a user input requesting an analysis of one or more quality records;
extract the one or more quality records, wherein each quality record comprises one or more JSON objects;
identify an applicable rule for parsing each of the one or more JSON objects, wherein the applicable rule is based on one or more of the user input, the one or more quality records and the JSON objects;
parse each of the one or more JSON objects based on the identified applicable rule, wherein the parsing is performed by requesting an API corresponding to the identified applicable rule;
feed the parsed JSON objects to a large language model to obtain the analysis of the one or more quality records; and
display the obtained analysis of the one or more quality records to the user.
